# EUROPÄISCHE PATENTSCHRIFT

(11) **EP 0 490 938 B1**
(45) Veröffentlichungstag und Bekanntmachung des Hinweises auf die Patenterteilung: **03.05.1995**
(21) Anmeldenummer: 90913181.5
(22) Anmeldetag: 06.09.1990
(51) Int. Cl.: B01J 20/32, B01D 67/00

(54) **MIKROPORÖSES ADSORBENS**
MICROPOROUS ADSORBENT
ADSORBANT MICROPOREUX

(30) Priorität: 06.09.1989 DE 3929645
(43) Veröffentlichungstag der Anmeldung: 24.06.1992
(73) Patentinhaber: SARTORIUS AG, 37075 Göttingen (DE)
(72) Erfinder: DEMMER, Wolfgang, D-3400 Göttingen (DE); HÖRL, Hans-Heinrich, D-3406 Bovenden (DE); NUSSBAUMER, Dietmar, D-3400 Göttingen (DE); WEISS, Abdul, Razak, D-3400 Göttingen (DE); WÜNN, Eberhard, D-3400 Göttingen (DE)
(74) Vertreter: Köhler, Rudolf
(86) Internationale Anmeldenummer: EP9001501
(87) Internationale Veröffentlichungsnummer: WO9103317

(56) Entgegenhaltungen:
- EP-A- 0 082 355
- EP-A- 0 111 714
- EP-A- 0 129 905
- EP-A- 0 217 510
- EP-A- 0 343 387
- US-A- 4 336 161

## Beschreibung

Die Erfindung betrifft ein mikroporöses Adsorbens mit einem reaktiven Textilfarbstoff, ein Verfahren zu dessen Herstellung, sowie dessen Verwendung zur adsorptiven Stofftrennung.

Adsorptive Stofftrennungen wurden bisher beispielsweise unter Verwendung von körnigen mikroporösen Adsorbentien durchgeführt, die aufgrund ihres mikroposösen Aufbaus eine hohe wirksame Oberfläche und damit Adsorptionskapazität besitzen. Es war ferner bekannt, diese mikroporösen körnigen Adsorbentien mit reaktiven Textilfarbstoffen zu modifizieren, die jedoch größtenteils in der Matrix des Polymerbasismaterials eingeschlossen sind und nur in geringem Ausmaß an der inneren und äußeren Oberfläche der porösen Körner für eine Adsorption zur Verfügung stehen.

Aus der EP-A2-111 714 ist eine Membran bekannt, die einen dünnen, vernetzten und hydrophilen Film aufweist, der an einer dickeren Membran gebunden ist. Dieser Film erstreckt sich nur über die äußere Oberfläche der Membran.

Die Erfindung hat sich die Aufgabe gestellt, ein gattungsgemäßes mikroporöses Adsorbens zur Verfügung zu stellen, bei dem die Verfügbarkeit des reaktiven Textilfarbstoffs für die Adsorption insbesondere durch kurze Diffusionswege in der Matrix verbessert ist, um dadurch eine möglichst hohe Adsorption der abzutrennenden Stoffe zu gewährleisten.

Diese Aufgabe wird gelöst mit einem mikroporösen Adsorbens gemäß Anspruch 1, einem Verfahren zu dessen Herstellung gemäß Anspruch 8, sowie dessen Verwendung gemäß Anspruch 13.

Im Gegensatz zu den bisher verwendeten, insbesondere körnigen, Adsorbentien befinden sich im Falle des erfindungsgemäßen Adsorbens die adsorptionsfähigen Materialien nur auf den inneren und äußeren Oberflächen des Membranfilterbasismaterials, wobei aufgrund der flächigen Struktur dieses Basismaterials auch die Diffusionswege wesentlich kürzer sind als im Falle der bisher verwendeten körnigen mikroporösen Materialien, so daß einerseits aufgrund der hohen Verfügbarkeit des adsorptionsfähigen Materials auf den inneren und äußeren Oberflächen des Membranfilterbasismaterials sowie der gegebenen kurzen Diffusionswege das erfindungsgemäße Adsorbens wesentlich höhere Adsorptionskapazitäten besitz als die bisher bekannten Materialien.

Mikroporöse Polymermembranen lassen sich in Ultra- und Mikrofiltrationsmembranen einteilen, wobei die ersteren durch Porengrößen charakterisiert sind, die sie zur Rückhaltung von Makromolekülen etwa im Molmassenbereich zwischen 500 und 1.000.000 Daltons befähigen, während die letzeren wirksame Porengrößen im Bereich zwischen 0,01 und 10 um aufweisen. Diese Membranfilter und ihre Herstellung sind bekannt. Sie können aus beliebigen natürlichen oder synthetischen Materialien, vorzugsweise natürlichen oder synthetischen Polymeren, insbesondere synthetischen Polymeren bestehen. Erfindungsgemäß bestehen die Membranfilter vorzugsweise aus stickstoffhaltigen Polymeren, insbesondere aus aliphatischen oder aromatischen Polyamiden, Polysulfonamiden, Polyurethanen oder Polymeren, die den Stickstoff nicht in der Hauptkette, sondern in der Seitenkette aufweisen.

Die inneren und äußeren Oberflächen dieser Membranfilter weisen einen möglichst dicken und dichten Überzug aus einer aufgepfropften Schicht aus einem hydroxylgruppenhaltigen, mit einem reaktiven Textilfarbstoff modifizierten Polymeren auf. Das Aufpfropfen dieser Schicht auf den inneren und äußeren Oberflächen der Membranfilter, die insbesondere aus stickstoffhaltigen Polymeren bestehen, erfolgt beispielsweise nach der in den Deutschen Offenlegungsschriften P 39 29 647.4 und P 3929648.2 (Patentanmeldungen, die am gleichen Tag wie die vorliegende Anmeldung unter den internen Bearbeitungszeichen S 4365 und S 4364 beim Deutschen Patentamt eingereicht worden sind) beschriebenen Weise, das heißt durch Umsetzen der hydroxylgruppenhaltigen Ausgangsmonomeren mit dem Membranfilter aus einem stickstoffhaltigen Polymeren in Gegenwart eines wasserenthaltenden Mediums, Tetrachlorkohlenstoff sowie eines Reduktionsmittels beziehungsweise in der Weise, daß unter Verwendung von anorganischen oder organischen Hypohalogeniten und/oder organischen N-Halogenderivaten als Halogenierungsmittel Wasserstoffatome an den Stickstoffatomen der Polymermembranen durch Halogenatome ersetzt werden und ein Teil derselben durch Reduktionsmittel in Gegenwart von ethylenisch ungesättigten Monomeren unter radikalischer Aufpfropfung derselben an den Stickstoffatomen entfernt werden und anschließend die verbleibenden Halogenatome durch Reduktionsmittel in Abwesenheit von Monomeren entfernt werden.

Nach diesen Methoden ist es möglich, gezielt nur eine Pfropfung an den inneren und äußeren Oberflächen der Membranfilter zu bewirken. Die aufgepfropften hydroxylgruppenhaltigen Polymeren können dann in bekannter Weise mit reaktiven Textilfarbstoffen modifziert werden, die chemisch an den aufgepfropften Polymeren fixiert werden.

In besonders bevorzugter Weise wird erfindungsgemäß als Textilfarbstoff Cibachronblau F3GA verwendet, es kommen jedoch alle bisher für derartige Adorptionen verwendete Textilfarbstoffe in Frage, die insbesondere für die gruppenspezifische Bindung von Enzymen geeignet sind. Cibachronblau weist ein spezifisches Bindevermögen für Enzyme auf, insbesondere für Dehydrogenasen, ist jedoch auch geeignet, Albumin von den übrigen Plasmaproteinen abzutrennen.

Vorzugsweise wird als hydroxylgruppenartiges Monomeres Hydroxyethylmethacrylat verwendet, es kommen jedoch beliebige hydroxylgruppenhaltige Monomere beziehungsweise Mischungen davon zum Aufpfropfen in Frage, beispielsweise diejenigen, die in den beiden genannten Offenlegungsschriften erwähnt sind.

Nachdem sich im Falle der erfindungsgemäßen Adorbentien das aufgepfropfte Polymere auf den inneren und äußeren Oberflächen der eingesetzten Membranfilterbasismaterialien befindet, die aufgrund ihrer flächigen Struktur kurze Diffusionswege bedingen, sind die Adorptionskapazitäten bei den erfindunsgemäßen Adsorbentien wesentlich höher als diejenigen der bekannten körnigen mikroporösen Adsorbentien oder ähnlicher bekannter Materialien.

Ferner stellt die erfindungsgemäß aufgepfropfte Polymerschicht ein wasserquellbares Gel dar, in dessen Zwischenräume die zu bindenden Moleküle eindringen können. Dadurch wird die Adsorptionskapazität wesenlich gegenüber den bisher bekannten Adsorbentien gesteigert, bei denen nur die Porenoberfläche für die Adsorption zur Verfügung steht.

Eine typische Ausführungsform eines erfindungsgemäßen mikroporösen Adsorbenses ist durch folgende Daten gekennzeichnet:

| | |
|---|---|
| Basismaterial: | Vliesverstärktes Nylonmembranfilter mit einer nominellen Porengröße von 0,45 »m. |
| Dicke: | 215 »m |
| Durchflußleistung: | D (ml/cm²min bar) |
| für destilliertes Wasser | 10,9 |
| 0,01 M Natriumphosphatpuffer | (pH 7) 23,9 |
| 0,10 M Natriumphosphatpuffer | 31,5 |
| 1 M Natriumphosphatpuffer | 44,1 |
| Bindekapazität für Lactatdehydro genase: | 450 bis 500 ug/cm² |
| Aufgepfropftes Monomeres: | Hydroxyethylmethacrylat |
| Anteil des Pfropfpolymeren (bezogen auf Nylonmatrix + Pfropfpolymeres): | 31,7 Gew.-% |

| Verhalten bei Sterilisation: | |
|---|---|
| Autoklavieren (3 x 1 h bei 121°C): | keine Änderung der Lactatdehydrogenasebindung |
| Ethylenoxidbegasung: | keine Änderung der Lactatdehydrogenasebindung |

Die erfindungsgemäßen mikroporösen Adsorbentien werden in zweckmäßiger Weise in einer Vorrichtung verwendet, wie sie in der DE-OS 39 29 643.1 (Patentanmeldung, die am gleichen Tag wie die vorliegende Anmeldung unter dem internen Bearbeitungszeichen S 4492 beim Deutschen Patentamt eingereicht worden ist) beschrieben wird (vgl. insbesondere das Beispiel 2).

Es ist ein besonderer Vorteil der erfindungsgemäßen Adsorbentien gegenüber den bekannten, insbesondere körnigen Adsorbentien beispielsweise auf Agarosebasis, besteht darin, daß bei einer Austrocknung des Materials keine Schädigungen, wie zum Beispiel eine drastische Abnahme der Bindungskapazität, zu befürchten sind.

Bei der technischen Anwendung ist es daher nicht erforderlich, das Adsorbens zwischen den einzelnen Einsätzen feucht zu lagern, was mit dem Risiko einer Verkeimung verbunden wäre. Darüber hinaus ist es nicht erforderlich, bei der Herstellung die kostenintensive Gefriertrocknung anzuwenden. Es ist vielmehr möglich, das Material auf herkömmliche Weise thermisch zu trocknen, wobei Temperaturen bis 110°C problemlos angewandt werden können. Allerdings tritt bei höheren Temperaturen ein gewisser Abfall der Bindungskapazität ein. Überraschenderweise wurde festgestellt, daß eine Imprägnierung des Materials mit einer wäßrigen, 2 - 40 %igen Glycerinlösung, vorzugsweise einer 5 - 20 %igen und besonders bevorzugt einer 10 %igen Lösung, nicht nur der Abfall der Bindungskapazität praktisch vollständig vermieden wird, sondern darüber hinaus auch die Lagerbeständigkeit ganz erheblich verbessert wird. Anstelle von Glycerin können auch andere, in der Technik zur Verhinderung der vollständigen Austrocknung gebrauchliche Substanzen, wie z.B. Sorbit oder Ethylenglycol eingesetzt werden, doch wird im allgemeinen Glycerin bevorzugt.

Besonders überraschend ist die Tatsache, daß ein Glyceringehalt des erfindungsgemäßen Adsorbens auch seine Lichtbeständigkeit erheblich verbessert. Dies hat insofern eine große praktische Bedeutung, als die Lichtempfindlichkeit von Textilfarbstoffen allgemein bekannt ist und ohne besondere Vorkehrungen, wie die erwähnte Glycerinimprägnierung, eine Lagerung des Materials schon unter der Einwirkung von sichtbarem Licht und besonders von UV-Strahlung im Laufe von Wochen und Monaten zu einer deutlichenr Abnahme der Bindungskapazität führt.

Die folgenden Beispiele erläutern die Erfindung.

### Beispiel 1

Herstellung eines mikroporösen Adsorbens mit Reactive Blue 2 als Farbstoffligand.

Als Basismembranen für die Fixierung von Reactive Blue 2 (Handelsname: Cibacronblau F2GA, Ciba-Geigy) wurden Nylon 6,6-Membranen der nominellen Porengröße 0.45 » benutzt, die nach dem in der Anmeldung P 39 29 647.4-44 beschriebenen Verfahren in abgestuften Pfropfgraden mit Hydroxyethylmethacrylat gepfropft wurden. Die Pfropfbedingungen sind in Beispiel 7 der genannten Anmeldung im einzelnen beschrieben.

Die Fixierung des Farbstoffliganden erfolgte an einer Membranbahn von 30 cm Breite in einer Vorrichtung, die in der Textilindustrie als Jigger bekannt ist und in wesentlichen aus einer Wanne, die die Behandlungslösung, in diesem Fall die Färbeflotte, aufnimmt, und zwei Walzen besteht, auf die die Materialbahn wechselseitig auf- und abgewickelt wird. Die hin und herlaufende Materialbahn wird dabei ständig durch die Wanne gezogen und somit mit frischer Bhandlungslösung in Kontakt gebracht.

Als Färbeflotte wurde eine frisch bereitete wäßrige Lösung von 5% Cibacronblau F2GA, 10 % Harnstoff, 0.3 % Ludigol (BASF) und 2.18 % Natriumhydroxid verwendet. Die Temperatur wurde auf 23°C gehalten und die Behandlung über einen Zeitraum von 20 Stunden durchgeführt. Anschließend wurde die Färbeflotte aus dem Jigger abgelassen und die Membranbahn, ebenfalls im Jigger, 30 min mit mehrfach ausgetauschtem RO-Wasser von 60°C gespült. Im nächsten Spülschritt wurde in gleicher Weise mit 10 %iger Harnstofflösung bei 95°C behandelt und schließlich ein Spülschritt mit kaltem RO-Wasser durchgeführt.

Die erhaltenen Membranproben wurden auf ihre Bindekapazität für Lactatdehydrogenase (LDH) geprüft. Dazu wurde eine Membranprobe von 25 mm Durchmesser in ein Filtrationsgerät eingelegt und eine Lösung von 250 »g/ml LDH in 10 mM Phosphatpuffer pH 7 durchfiltriert, wobei die LDH-Aktivität in Teilmengen des Filtrats bestimmt wurde. Die Filtration wurde abgebrochen, sobald im Filtrat mehr als 10 % der Ausgangsaktivität festgestellt wurden. Anschließend wurde die gesamte im Filtrat befindliche Aktivität ermittelt und aus der Differenz zur Ausgangsaktivität die LDH-Bindungskapazität der Probe berechnet. Die LDH-Bestimmung erfolgte nach einem Standardverfahren, das in H.U.Bergmeyer E. Bernt "Methoden der enzymatischen Analyse", H.U. Bergmeyer (Herausg.), Verlag Chemie, Weinheim, 2. Aufl. (1970), Seite 533-538, beschrieben ist.

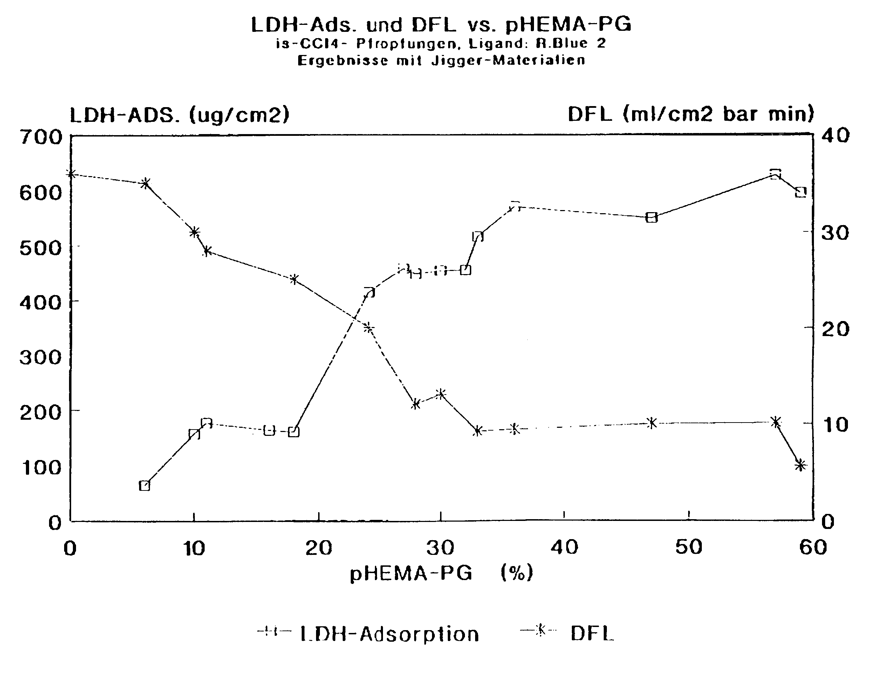

In Fig. 1 sind die Bindungskapazität und die Durchflußleistung der erhaltenen Affinitätsmembranen in Abhängigkeit vom Pfropfgrad dargestellt. Es zeigt sich, daß ein bestimmter Mindestpropfgrad, der in dem gewählten Porengrößenbereich etwa 20 % beträgt, zur Gewährleistung einer hohen Bindungskapazität erforderlich ist, wobei der Anstieg der Bindungskapazität von einer Verminderung der Durchflußleistung begleitet ist.

### Beispiel 2

Eigenschaften Von Adsorbentien mit verschiedenen Farbstoffliganden.

An einer Ausgangsmembrane fit einem Pfropfgrad von 28 %, die im übrigen den in Beispiel 1 genannten Ausgangsmembranen entsprach, wurden nach dem ebenfalls in Beispiel 1 beschriebenen Verfahren, bzw. nach einer Abwandlung dieses Verfahrens, verschiedene Reaktivfarbstoffe, deren Eignung als Affinitätsliganden aus der Literatur bekannt ist, fixiert.

Die erwähnte Abwandlung des Verfahrens wurde im Falle derjenigen Farbstoffe angewandt, bei denen es sich im Gegensatz zu dem Monochlortriazinfarbstoff Reactive Blue 2 um DIchlortriazinfarbstoffe handelt (Reactive Yellow 86, Reactive Brown 10). In diesen Fällen bestand die Färbeflotte aus 7% Farbstoff, 10 % Harnstoff, 2.5 % Na-Hydrogencarbonat und 2.5 % Natriumcarbonat.

Obwohl diese Farbstoffliganden eine andere Spezifität als Reactive Blue 2 aufweisen, wurden sie für eine orientierende Bewertung ebenfalls durch die LDH-Bindung charakterisiert.

| Farbstoffligand (R = Reactive) | Durchflußleistung (ml/cm².min.bar) | LDH-Bindung (»g/cm²) |
|---|---|---|
| R. Yellow 86 | 14 | 85 |
| R. Blue 2 | 12 | 450 |
| R. Red 120 | 10 | 250 |
| R. Green 19 | 15 | 300 |

### Beispiel 3.

Fixierung von Reactive Blue 2 in Gegenwart von Kochsalz und Trocknung des Adsorbens in Abwesenheit und in Gegenwart von Glycerin.

Das in Beispiel 1 beschriebene Färbeverfahren wurde dahingehend abgeändert, daß der Färbeflotte 5 % Natriumchlorid zugesetzt wurde. In Vorversuchen war festgestellt worden, daß dadurch die Farbstoffixierung erheblich beschleunigt wird. Die Färbung wurde zweimal je drei Stunden mit jeweils erneuerter Färbeflotte durchgeführt. Anschließend wurde die Membrane auf einer Trockentrommel mit einer Oberflächentemperatur von 110°C getrocknet und die LDH-Bindekapazität geprüft. Zur Überprüfung der Lager- und Lichtbeständigkeit der Materialien wurden sie 60 Tage aufbewahrt, und zwar sowohl unter Ausschluß von Licht als auch unter Lichteinwirkung. Die Lichteinwirkung wurde dadurch gewährleistet, daß die Proben in einem Polyethylenbeutel an ein Fenster in Südlage geklebt wurden.

| ZEIT Tage | LDH-Bindekapazität (»g/cm²) | | | |
|---|---|---|---|---|
| | mit GLYZERIN | | ohne GLYZERIN | |
| | Lagerung dunkel | Lagerung hell | Lagerung dunkel | Lagerung hell |
| 0 | 495 | | 350 | |
| 30 | 420 | 350 | 360 | 290 |
| 60 | 410 | 340 | 410 | 140 |

## Patentansprüche

1. Mikroporöses Adsorbens mit einem reaktiven Textilfarbstoff,
**gekennzeichnet durch**
ein Membranfilter, dessen äußere und innere Oberflächen mit einer aufgepfropften Schicht aus einem hydroxylgruppenhaltigen, mit dem reaktiven Textilfarbstoff modifizierten Polymeren versehen sind.

2. Mikroporöses Adsorbens nach Anspruch 1, dadurch gekennzeichnet, daß das Membranfilter aus stickstoffhaltigen Polymeren besteht.

3. Mikroporöses Adsorbens nach den Ansprüchen 1 und 2, dadurch gekennzeichnet, daß das Membranfilter aus aliphatischen oder aromatischen Polyamiden, Polysulfonamiden, Polyurethanen oder Polymeren besteht, die den Stickstoff nicht in der Hauptkette, sondern in der Seitenkette aufweisen.

4. Mikroporöses Adsorbens nach den vorhergehenden Ansprüchen, dadurch gekennzeichnet, daß das Membranfilter ein vliesverstärktes Nylonmembranfilter ist.

5. Mikroporöses Adsorbens nach den Ansprüchen 1 bis 3, dadruch gekennzeichnet, daß das aufgepfropfte hydroxylgruppenhaltige Polymere aus Hydroxylethylmethacrylat besteht.

6. Mikroporöses Adsorbens nach den vorhergehenden Ansprüchen, dadurch gekennzeichnet, daß der reaktive Textilfarbstoff zur gruppenspezifischen Bindung von Protein geeignet ist.

7. Mikroporöses Adsorbens nach Anspruch 6, dadurch gekennzeichnet, daß der reaktive Farbstoffligand Reactive Blue 2, Reactive Yellow 86, Reactive Brown 10, Reactive Red 120 oder Reactive Green 19 ist.

8. Verfahren zum Herstellen eines mikroporösen Adsorbens gemäß einem der vorhergehenden Ansprüche,
**dadurch gekennzeichnet,** daß man ein Membranfilter, dessen äußere und innere Oberflächen mit einer aufgepfropften Schicht aus einem hydroxylgruppenhaltigen Polymer versehen ist, mit einer wäßrigen basischen Behandlungslösung behandelt, die den Reaktivfarbstoff enthält.

9. Verfahren nach Anspruch 8, dadurch gekennzeichnet, daß man der Behandlungslösung etwa 5 % Natriumchlorid zusetzt.

10. Verfahren nach den Ansprüchen 8 und 9, dadurch gekennzeichnet, daß man das Adsorbens mit einer wäßrigen, 2 bis 40-prozentigen Glycerinlösung imprägniert.

11. Verfahren nach Anspruch 10, dadurch gekennzeichnet, daß man mit einer 5 bis 20-prozentigen Glycerinlösung imprägniert.

12. Verfahren nach den Ansprüchen 8 und 9, dadurch gekennzeichnet, daß man das Adsorbens mit Ethylenglycol oder Sorbit imprägniert.

13. Verwendung eines mikroporösen Adsorbens gemäß den vorhergehenden Ansprüchen zur adsorptiven Stofftrennung, insbesondere zur gruppenspezifischen Bindung von Protein, insbesondere Enzym- und Plasmaprotein.

## Claims

1. Microporous adsorbent with a reactive textile dye, characterised by a membrane filter, the outer and inner surfaces of which are provided with a grafted layer of a polymer containing the hydroxyl group and modified by the reactive dye.

2. Microporous adsorbent according to claim 1, characterised thereby, that the membrane filter consists of polymers containing nitrogen.

3. Microporous adsorbent according to the claims 1 and 2, characterised thereby, that the membrane filter consists of aliphatic or aromatic polyamides, polyurethanes, polysulphanamides or polymers which display the nitrogen not in the main chain, but in the side chain.

4. Microporous adsorbent according to the preceding claims, characterised thereby, that the membrane filter is a fleece-reinforced nylon membrane filter.

5. Microporous adsorbent according to the claims 1 to 3, characterised thereby, that the grafted polymer containing the hydroxyl group consists of hydroxyl ethyl methacrylate.

6. Microporous adsorbent according to the preceding claims, characterised thereby, that the reactive textile dye is suitable for the group-specific bonding of protein.

7. Microporous adsorbent according to claim 6, characterised thereby, that the reactive dye ligand is reactive blue 2, reactive yellow 86, reactive brown 10, reactive red 120 or reactive green 19.

8. Method for the production of a microporous adsorbent according to one of the preceding claims, characterised thereby, that a membrane filter, the outer and inner surfaces of which are provided with a grafted layer of a polymer containing the hydroxyl group, is treated with an aqueous treatment solution which contains the reactive dye.

9. Method according to claim 8, characterised thereby, that about 5% sodium chloride is added to the treatment solution.

10. Method according to the claims 8 and 9, characterised thereby, that the adsorbent is impregnated with an aqueous 2 to 40% glycerol solution.

11. Method according to claim 10, characterised thereby, that impregnation is with a 5 to 20% glycerol solution.

12. Method according to the claims 8 and 9, characterised thereby, that the adsorbent is impregnated with ethylene glycol or sorbite.

13. Use of a microporous adsorbent according to the preceding claims for adsorptive substance separation, in particular for the group-specific bonding of protein, in particular enzyme and plasma protein.

## Revendications

1. Adsorbant microporeux avec un colorant textile réactif, caractérisé par une membrane filtrante dont la surface extérieure et la surface intérieure sont pourvues d'une couche greffée formée d'un polymère contenant des groupes hydroxyles et modifié avec le colorant textile réactif.

2. Adsorbant microporeux selon la revendication 1, caractérisé en ce que la membrane filtrante est formée d'un polymère azoté.

3. Adsorbant microporeux selon les revendications 1 et 2, caractérisé en ce que la membrane filtrante est formée de polyamides, de polysulfonamides, de polyuréthanes ou de polymères, aliphatiques ou aromatiques, qui ne contiennent pas l'azote dans la chaîne principale, mais dans la chaîne latérale.

4. Adsorbant microporeux selon les revendications précédentes, caractérisé en ce que la membrane filtrante est une membrane filtrante en Nylon renforcée avec un non-tissé.

5. Adsorbant microporeux selon les revendications 1 à 3, caractérisé en ce que le polymère greffé contenant des groupes hydroxyles est formé de méthacrylate d'hydroxyéthyle.

6. Adsorbant microporeux selon les revendications précédentes, caractérisé en ce que le colorant textile réactif convient pour la liaison spécifique des groupes d'une protéine.

7. Adsorbant microporeux selon la revendication 6, caractérisé ce que le ligand réactif du colorant est le Bleu réactif 2, le Jaune réactif 86, le Marron réactif 10, le Rouge réactif 120 ou le Vert réactif 19.

8. Procédé de préparation d'un adsorbant microporeux selon l'une des revendications précédentes, caractérisé en ce qu'on traite une membrane filtrante, dont la surface extérieure et la surface intérieure sont pourvues d'une couche greffée formée d'un polymère contenant des groupes hydroxyles, avec une solution aqueuse basique de traitement qui contient le colorant réactif.

9. Procédé selon la revendication 8, caractérisé en ce qu'on ajoute environ 5 % de chlorure de sodium à la solution de traitement.

10. Procédé selon les revendications 8 et 9, caractérisé en ce qu'on imprègne l'adsorbant avec une solution aqueuse contenant 2 à 40 % de glycérol.

11. Procédé selon la revendication 10, caractérisé en ce qu'on effectue l'imprégnation avec une solution contenant 5 à 20 % de glycérol.

12. Procédé selon les revendications 8 et 9, caractérisé en ce qu'on imprègne l'adsorbant avec de l'éthylèneglycol ou du sorbitol.

13. Utilisation d'un adsorbant microporeux selon les revendications précédentes pour la séparation de substances par adsorption, en particulier pour la liaison spécifiques des groupes, notamment d'une protéine enzymatique ou d'une protéine plasmique.
